# EUROPEAN PATENT APPLICATION

(11) **EP 0 528 530 A1**
(43) Date of publication of application: **24.02.1993**
(21) Application number: 92306327.5
(22) Date of filing: 09.07.1992
(51) Int. Cl.: G01S 5/02, G06F 15/50

(54) **GPS navigation system with selective updating**

(30) Priority: 23.07.1991 JP 182296/91
(71) Applicant: PIONEER ELECTRONIC CORPORATION, Meguro-ku Tokyo-to (JP)
(72) Inventor: Yamauchi, Keiichi, c/o Pioneer Electronic Corp., Oaza-Yamada, Kawagoe-shi, Saitama-ken (JP)
(74) Representative: Brunner, Michael John

(57) **Abstract**

A navigation system includes a position measurement receiver for receiving an electric wave for use in position measurement transmitted from a satellite and for generating current position data at each predetermined position measurement timing. The current position data indicates the current position of a movable body in which the navigation system is installed. A storage unit stores latest current position data generated by the position measurement receiver in lieu of previous current position data so that the current position data stored in the storage unit is updated at the predetermined position measurement timing. A speed detection sensor outputs speed data indicating a speed of movement of the movable body. An update inhibiting unit determines whether or not the movable body is maintained in a stationary state on the basis of the speed data, and inhibits the latest current position data from being stored in the storage unit so that updating of the current position data stored in the storage unit is inhibited when it is determined that the movable body is maintained in the stationary state.

## Description

### BACKGROUND OF THE INVENTION

### 1. Field of the Invention

The present invention generally relates to navigation systems, and more particularly to a navigation system using a GPS (Global Positioning system) receiver. More specifically, the present invention is concerned with a technique intended to preventing fluctuations in data indicating the current position of a movable body maintained in the stationary state.

### 2. Description of the Related Art

A GPS navigation system utilizing artificial satellites is one kind of navigation system for use in movable bodies, such as automobiles, airplanes and ships. A GPS receiver used in such a GPS navigation system receives electric waves for position measurement, which are transmitted by three or more GPS satellite. The GPS receiver is adapted to measure the position of the electric wave receiving point by using pseudo-distance data including time offsets between the receiving point and each of the GPS satellites and pieces of data indicating each position of the GPS satellite. The receiver outputs GPS position measurement data indicating the position of the receiving point.

However, the above-mentioned GPS navigation system has the following disadvantages. Namely, the GPS position measurement data includes an error due to various factors, and hence the data indicating the current position of the receiving point also includes an error (approximately is a range of ±30m in general). In case that the navigation is carried out using the current position data including such an error, since the quantity of error obtained at each position measurement timing varies, the current position changes even when the movable body is maintained in the stationary state, When the current position of the movable body measured in the above manner is indicated on a m ap displayed on a display device in such a manner that the map is kept stationary, the current position varies on the map nevertheless the movable body is in fact maintained in the stationary state. Alternatively, when the current position of the movable body is displayed at a predetermined fixed position on the display, a display of the map fluctuates.

### SUMMARY OF THE INVENTION

It is therefore an object of the present invention to provide a GPS navigation system capable of preventing the current position data indicating the current position of a movable body maintained in the stationary state from varying and capable of accurately navigating the movable body.

The above object of the present invention can be achieved by a navigation system including the following structural elements. A position measurement receiver receives an electric wave for use in position measurement transmitted from a satellite and generates current position data on the basis of the received electric wave at each predetermined position measurement timing, the current position data indicating the current position of a movable body in which the navigation system is installed. A storage unit, which is coupled to the position measurement receiver, stores latest current position data generated by the position measurement receiver in lieu of previous current position data so that the current position data stored in the storage unit is updated at the predetermined position measurement timing. A speed detection sensor outputs speed data indicating a speed of movement of the movable body. An update inhibiting unit, which is coupled to the storage unit and the speed detection sensor, determines whether or not the movable body is maintained in a stationary state on the basis of the speed data, and inhibits the storage unit to update the current position data when it determines that the movable body is maintained in the stationary state.

Thus, when the movable body is maintained in the stationary state, the updated current position data can be prevented from being fluctuated regardless of the error caused in the GPS signal detecting operation etc., according to the present invention.

The nature, utility, and further features of this invention will be more clearly apparent from the following detailed description with respect to preferred embodiments of the invention when read in conjunction with the accompanying drawings briefly described below.

### BRIEF DESCRIPTION OF THE DRAWINGS

FIG. 1 is a block diagram of a basic structure of an embodiment of the present invention;
FIG. 2 is a block diagram of a basic structure of a GPS receiver shown in FIG. 1;
FIG. 3 is a flowchart showing the operation of the embodiment of the present invention shown in FIG. 1; and
FIG. 4 is a flowchart showing the operation of another embodiment of the present invention.

### DESCRIPTION OF THE PREFERRED EMBODIMENT

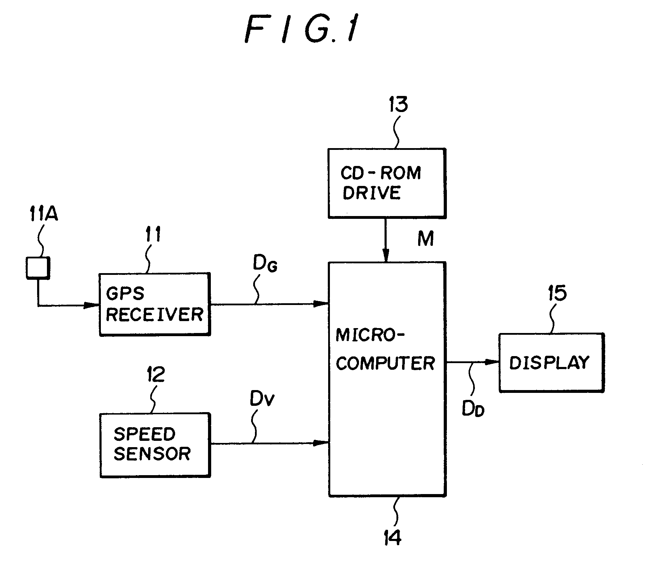

FIG. 1 shows the basic structure of an on-vehicle navigation system according to an embodiment of the present invention. An on-vehicle navigation system shown in FIG. 1 includes a GPS receiver 11, a vehicle speed sensor 12, a CD-ROM drive 13, a microcomputer 14 and a display 15. The GPS receiver 11 receives an electric wave from a GPS satellite (not shown) through an antenna 11A, and generates GPS position measurement data D_{G} from the received electric wave. The vehicle speed sensor 12 counts vehicle speed pulses dependent on revolutions of a wheel shaft or the like, and generates data D_{V} indicating the current vehicle speed. The microcomputer 14 reads map data M from the a CD-ROM drive 13 on the basis of the inputted data D_{G}, executes map-matching the data D_{G} with the map data M, and generates display data D_{D} for displaying the current position of the vehicle on the map. The display 15 displays the current position of the vehicle on the map by using the display data D_{D} supplied from the microcomputer 14.

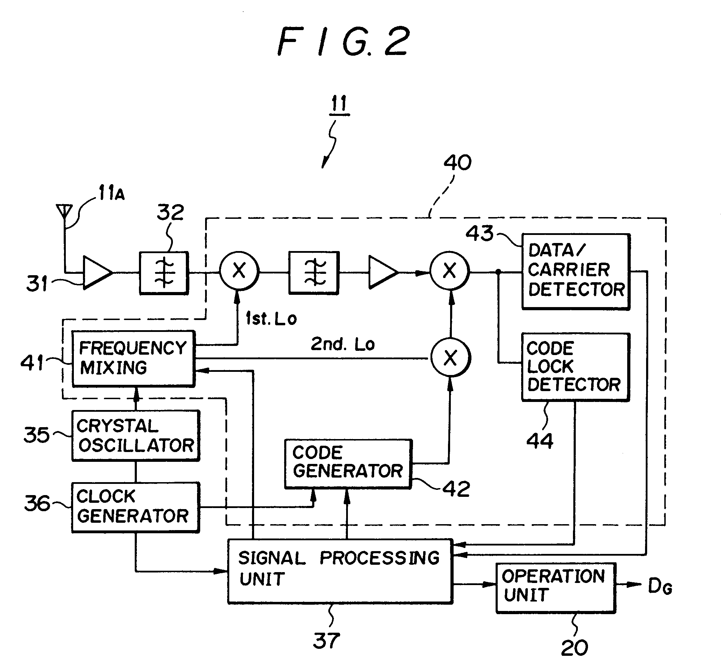

The GPS receiver 11 will be described in detail with reference to FIG. 2. The antenna 11A is coupled to a GPS receiving unit 40 via a preamplifier 31 and a band-pass filter 32. In addition to these structural elements, the GPS receiver 11 is provided with an operation unit 20, a crystal oscillator 35, a clock generator 36, and a signal processing unit 37. A frequency mixing circuit 41 generates a signal having the same pattern as data relating to a carrier of the GPS satellite, the position thereof, and a clock built in the GPS satellite. The crystal oscillator 35 generates a reference frequency signal, which is a reference timing control signal of the GPS receiver 11. The clock generator 36 generates, from the reference frequency signal, a clock signal for controlling operation timings of the signal processing unit 37. The operation unit 20 is connected to the signal processing unit 37 so as to generate the GPS data D_{G} on the basis of the output of the signal processing unit 37.

A code generator 42 receives the clock signal generated by the clock generator 36, and generates a code signal having the same pattern as a distance measurement signal from the GPS satellite on the basis of the clock signal. A data/carrier detector 43 synchronously or mutually detects, by using the output signals of the frequency mixing circuit 41 and the code generator 42, data relating to the clock built in the GPS satellite and an orbit of the GPS satellite, and the carrier. A code lock detector 44 synchronously detects the above-mentioned distance measurement signal by using the code signal generated by the code generator 42.

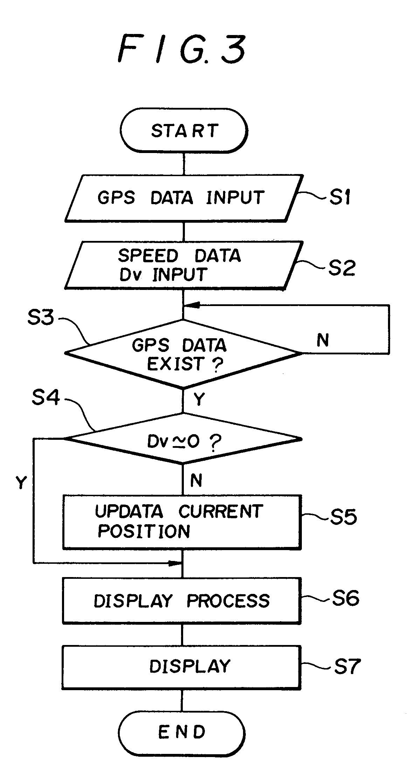

A description will now be given, with reference to FIG. 3, of the operation of the on-vehicle GPS navigation system.

In FIG. 3, the GPS position measurement data D_{G} outputted from the GPS receiver 11 is applied to the microcomputer 14 as shown in FIG. 1 at each predetermined position measurement timing (step S1). The vehicle speed data D_{V} outputted from the vehicle speed sensor 12 is also applied to the microcomputer 14 at each predetermined position measurement timing (step S2). Then, the microcomputer 14 determines whether or not the GPS position measurement data D_{G} is received (step S3). When it is determined that the GPS position measurement data D_{G} is not yet received (NO), the microcomputer 14 executes step S3 again.

When it is determined, in step S3, that the GPS position measurement data D_{G} has been received (YES), the flow branches to the step S4. The microcomputer 14 determines, by referring to the vehicle speed data D_{V}, whether or not the vehicle is maintained in the stationary state (step S4). More specifically, in step S4, the microcomputer 14 determines whether or not the vehicle speed data D_{V} indicates zero or a value nearly equal thereto.

When it is determined, in step S4, that the vehicle is maintained in the stationary state (YES), that is, when the vehicle speed data D_{V} indicates zero or a value nearly equal thereto, the microcomputer 14 does not update the current position of the vehicle with new GPS position measurement data D_{G.} That is, the microcomputer 14 executes the map matching with the map data M by using the previous GPS position measurement data D_{G}, and outputs the display data D_{D} to the display 15 (step S6). Hence, the current position of the vehicle is indicated on the map displayed on the display 15 without changing or fluctuating the current position displayed thereon (step S7).

When the vehicle is moving (NO) in step S4, that is, when the vehicle speed data D_{V} is equal to neither zero nor a value nearly equal thereto, the microcomputer 14 updates i.e, replaces the new GPS position measurement data D_{G} with the GPS position measurement data D_{G} stored in a built-in memory (not shown) (step S5). Then, the microcomputer 14 executes the map matching with the map data M by using the updated GPS position measurement data D_{G}, and outputs the updated display data D_{D} (step S6). Hence, the current position of the vehicle based on the movement thereof is indicated on the map on the display 15 (step S7).

In this manner, according to the present embodiment, it is possible to prevent the display of the current position or the map from fluctuating when the vehicle is maintained in the stationary state.

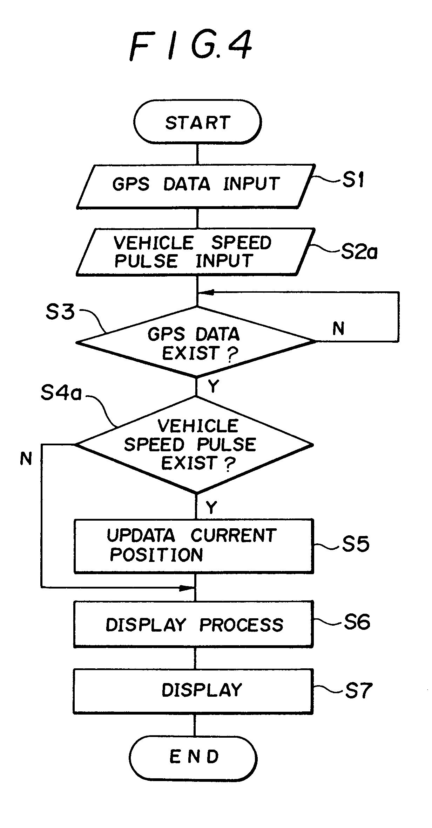

A description will now be given, with reference to FIG. 4, of another embodiment of the present invention. In this embodiment, it is determined whether or not the vehicle is maintained in the stationary state by determing whether or not the vehicle pulse is detected by the speed sensor 12 in FIG. 1 within a predetermined period. It will be noted that in the embodiment shown in FIG. 3, it is determined whether or not the vehicle is maintained in the stationary state by determining whether or not the vehicle speed detected by the speed sensor 12 in FIG. 1, is equal to zero or nearly equal thereto.

In FIG. 4, the GPS position measurement data D_{G} outputted from the GPS receiver 11 is applied to the microcomputer 14 at each predetermined position measurement timing (step S1), Subsequently, the vehicle pulse outputted from the vehicle speed sensor 12 is applied to the microcomputer 14 at each predetermined position measurement timing (step S2a). The microcomputer 14 determines whether or not the GPS position measurement data D_{G} has been received (step S3). When the result of this determination is NO, the microcomputer 14 executes step S3 again.

When the GPS position measurement data D_{G} has been received (YES) in step S3, the microcomputer 14 detects the presence/non-presence of the speed pulse from the vehicle speed sensor 12, and determines whether or not the vehicle is maintained in the stationary state (step S4a). More specifically, the microcomputer 14 determines whether or not the speed pulse is received within a predetermined period.

When it is determined that the vehicle is maintained in the stationary state (NO) in step S4a, that is, when the speed pulse is not detected within the predetermined period, the microcomputer 14 does not update the current position of the vehicle by means of new GPS position measurement data D_{G}. That is, the microcomputer 14 executes the map matching with the map data M by using the previous GPS position measurement data D_{G}, and outputs the display data D_{D} to the display 15 (step S6). Hence, the current position of the vehicle is indicated on the map displayed on the display 15 without changing the current position displayed thereon (step S7).

When the vehicle is moving, that is, the speed pulse is detected (YES) in step S4a, the microcomputer 14 updates i.e. substitutes the new GPS position measurement data D_{G} for the GPS position measurement data D_{G} currently stored in the built-in memory (step S5), Then, the microcomputer 14 executes the map matching with the map data M by using the updated GPS position measurement data D_{G}, and outputs the updated display data D_{D} (step S6). Hence, the current position of the vehicle based on the movement thereof is indicated on the map on the display 15 (step S7).

In this manner, according to the present embodiment, it is possible to prevent the display of the current position or the map from fluctuating when the vehicle is maintained in the stationary state.

In the specifically described embodiments of the present invention, the current position of the movable body is indicated on the display. However, the present invention is not limited to these embodiments, but includes a structure in which the current position is indicated by numeral data or the like, or processed for a subsequent operation. In this case, the numeral data etc. indicating the present position can be prevented from fluctuating, so that the treatment or process of thus stable data can be easily performed.

As discussed above in detail, the current position data generated by the present embodiments accurately indicates the current position of the movable body which is maintained in the stationary state, and hence the aforementioned disadvantages are eliminated.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A navigation system comprising:
position measurement means for receiving an electric wave for use in position measurement transmitted from a satellite and for generating current position data on the basis of the received electric wave at each predetermined position measurement timing, said current position data indicating a current position of a movable body in which the navigation system is installed;
storage means, coupled to said position measurement means, for storing latest current position data generated by said position measurement means in lieu of previous current position data so that the current position data stored in said storage means is updated at said predetermined position measurement timing;
speed detection means for outputting speed data indicating a speed of movement of the movable body; and
update inhibiting means, coupled to said storage means and said speed detection means, for determining whether or not the movable body is maintained in a stationary state on the basis of the speed data and for inhibiting said storage means to update the current position data when said update inhibiting means determines that the movable body is maintained in the stationary state.

2. A navigation system as claimed in claim 1, wherein:
said speed data includes information indicative of an actual speed of movement of the movable body; and
said update inhibiting means comprises means for determining whether or not the actual speed is approximately equal to zero and for deciding that the movable body is maintained in the stationary state when it is determined that the actual speed of the movable body is equal to approximately zero.

3. A navigation system as claimed in claim 1, wherein:
said speed data comprises a series of pulses, which are generated by movement of the movable body; and
said update inhibiting means comprises means for determining whether or not at least one pulse is generated within a predetermined time and for deciding that the movable body is maintained in the stationary state when it is determined that said pulse is not generated within said predetermined time.

4. A navigation system as claimed in claim 1, further comprising output means for outputting the latest current position data from said storage means to an output medium.

5. A navigation system as claimed in claim 1, further comprising:
map memory means for storing map data forming maps;
a display; and
control means, coupled to said storage means, said map memory means and said display, for making the display indicate the current position of the movable body indicated by the latest current position data on at least one of the maps formed of said map data.

6. A navigation system as claimed in claim 5, wherein said control means is adapted to select one of the maps in accordance with the current position of the movable body and for making the display indicate the current position of the movable body on the selected map.

7. A navigation system as claimed in claim 1, wherein said position measurement means comprises a GPS receiver.
